# EUROPÄISCHE PATENTSCHRIFT

(11) **EP 2 931 564 B1**
(45) Veröffentlichungstag und Bekanntmachung des Hinweises auf die Patenterteilung: **23.08.2017**
(21) Anmeldenummer: 13818993.1
(22) Anmeldetag: 12.12.2013
(51) Int. Cl.: B60R 21/239

(54) **GASSACKANORDNUNG MIT EINER VORRICHTUNG ZUR STEUERUNG EINES AUSTRITTSQUERSCHNITTES EINER ENTLÜFTUNGSÖFFNUNG**
AIRBAG ARRANGEMENT COMPRISING A DEVICE FOR CONTROLLING AN OUTLET CROSS SECTION OF A VENT HOLE
ENSEMBLE FORMANT UN COUSSIN DE SÉCURITÉ GONFLABLE COMPRENANT UN DISPOSITIF SERVANT À COMMANDER UNE SECTION TRANSVERSALE DE SORTIE D'UNE OUVERTURE D'AÉRATION

(30) Priorität: 13.12.2012 DE 102012223078; 13.02.2013 DE 102013202314; 26.04.2013 DE 102013207696; 16.05.2013 DE 102013209135
(43) Veröffentlichungstag der Anmeldung: 21.10.2015
(73) Patentinhaber: Takata AG, 63743 Aschaffenburg (DE)
(72) Erfinder: BUCHHOLZ, André, 10249 Berlin (DE); WENDT, Mario, 14532 Stahnsdorf (DE); PFEIFFER, Johannes, 10965 Berlin (DE)
(74) Vertreter: Maikowski & Ninnemann Patentanwälte Partnerschaft mbB
(86) Internationale Anmeldenummer: PCT/EP2013/076400
(87) Internationale Veröffentlichungsnummer: WO 2014/090951

(56) Entgegenhaltungen:
- WO-A1-2011/157631
- US-A1- 2007 040 366

## Beschreibung

Die Erfindung betrifft eine Gassackanordnung für ein Fahrzeuginsassen-Rückhaltesystem nach dem Oberbegriff des Anspruchs 1, mit einem zum Schutz eines Fahrzeuginsassen durch einen Gasgenerator aufblasbaren Gassack, dessen Hülle einen mit Gas befüllbaren Innenraum des Gassacks definiert, mit einer Entlüftungsöffnung, durch die hindurch Gas aus dem Gassack abströmen kann, und mit einer Vorrichtung zur Steuerung des Austrittsquerschnittes der Entlüftungsöffnung, die mindestens ein Abdeckteil umfasst, mit dem die Entlüftungsöffnung überdeckbar ist, um diese zumindest teilweise zu verschließen, und die weiterhin einen Betätigungsmechanismus umfasst, der mit dem Abdeckteil zusammenwirkt, um den Austrittsquerschnitt der Entlüftungsöffnung zu verändern, wobei der Betätigungsmechanismus eine zusätzliche (von dem Gasgenerator verschiedene) Gasquelle und ein von dem Gassack verschiedenes und mittels der Gasquelle aufblasbares Element aufweist, welches beim Aufblasen derart mit dem Abdeckteil zusammenwirkt, dass es eine Änderung des Austrittsquerschnittes der Entlüftungsöffnung bewirkt.

Eine solche Gassackanordnung (auch als Airbagmodul bezeichnet) ist beispielsweise aus der WO 2011/157631 bekannt, wobei eine Gassacksanrodnung gemäß dem Oberbegriff des Anspruchs 1 offenbart ist, und wobei deren aufblasbares Element für die Abdeckung einer Entlüftungsöffnung in einem Gassack vorgesehen und durch lösbare Verbindungen, bevorzugt in Form von Reisnähten, an den die Entlüftungsöffnung umgebenden Randbereichen des Gassacks befestigt ist. Nach dem Zerstören der Reißnähte geben Teile des aufblasbaren Elementes die Entlüftungsöffnung frei, bzw. verschließen diese und passen so die Rückhaltung des Gassacks im Crashfall an bestimmte, sensierte Randbedingungen (Fahrzeuggeschwindigkeit, Insassenkennwerte, Sitzposition, usw.) an. Unabhängig von der Ausführung muss die Größe des aufblasbaren Elementes auf die Größe der zugeordneten Entlüftungsöffnung abgestimmt werden. Angepasst an verschiedene Einsatzbedingungen, wie z.B. Fahrzeugtyp, Art des Airbagmoduls (Fahrer-, Beifahrer-, Seitenairbagmodul etc.), Größe des Gassacks oder Kennung des Gasgenerators, weisen die Entlüftungsöffnungen unterschiedliche Formen und Größen auf. Das bedeutet, dass sich entsprechend auch die Dimensionierung (Zuschnitte, Nahtverläufe, befüllbares Volumen) der aufblasbaren Elemente ändert. Speziell die Auslegung der lösbaren Verbindungen (Reißnähte) erfordert dabei einen hohen Entwicklungsaufwand, da das initiierte, erwünschte Lösen in einem breiten Temperaturbereich sicher und schnell erfolgen soll, um im Crashfall die Rückhaltung des Gassacks zeitnah an die oben erwähnten Randbedingungen anpassen zu können.

Der Erfindung liegt das Problem zugrunde, eine Vorrichtung zur Steuerung des Austrittsquerschnittes einer Entlüftungsöffnung in einem Gassack mit einem aufblasbaren Element als steuerndes Teil zu schaffen, welche weitgehend unabhängig von der Ausführung des Gassackanordnung universell eingesetzt werden kann.

Gelöst wird dieses Problem durch die Breitstellung einer Gassackanordnung mit den Merkmalen des Anspruchs 1.

Das Abdeckteil ist danach mittels mindestens einer festen Verbindung und mindestens einer lösbaren Verbindung mit der Hülle des Gassacks verbunden, und das aufblasbare Element ist als ein von dem Abdeckteil verschiedenes (separates) Teil ausgebildet, welches über die lösbare Verbindung ebenfalls mit der Hülle des Gassacks verbunden ist.

Die lösbare Verbindung, das Abdeckteil und das aufblasbare Element können derart ausgebildet sein, dass wenn das aufblasbare Element mittels der zusätzlichen Gasquelle aufgeblasen wird, die lösbare Verbindung gelöst wird. Die lösbare Verbindung kann beispielsweise eine Reißnaht sein. Durch ein Lösen der lösbaren Verbindung kann das Abdeckteil unter Beibehaltung seiner festen Verbindung mit der Hülle des Gassacks von der Entlüftungsöffnung abhebbar oder durch die Entlüftungsöffnung hindurchdrückbar sein. Das Abheben des Abdeckteils von der Entlüftungsöffnung bzw. dessen Hindurchdrücken durch die Entlüftungsöffnung kann mittels aus dem Gassack abströmenden Gases erfolgen.

Bei einer derartigen Gassackanordnung gibt es mehrere Möglichkeiten, das Abdeckteil, das aufblasbare Element und die Hülle des Gassacks anzuordnen. Beispielsweise kann das Abdeckteil zwischen dem aufblasbaren Element und der Hülle des Gassacks angeordnet sein. Dabei können das Abdeckteil und das aufblasbare Element im Gassackinneren oder außen am Gassack angeordnet sein. Es ist ferner möglich, dass das aufblasbare Element zwischen dem Abdeckteil und der Hülle (auch als Wandung zu bezeichnen) angeordnet ist.

Weiterhin kann das aufblasbare Element im Gassackinneren angeordnet sein, während das Abdeckteil außerhalb des Gassacks an dessen Hülle angeordnet sein kann. Ebenso kann das aufblasbare Element außerhalb des Gassacks angeordnet sein, während das Abdeckteil im Inneren des Gassacks angeordnet ist.

Weiterhin kann vorgesehen sein, dass zwischen dem Abdeckteil und dem aufblasbaren Element eine Abdeckung angeordnet ist. Die Abdeckung kann aus einem Gewebematerial oder einer anderen Materialart mit vergleichbaren Eigenschaften hergestellt sein.

Das aufblasbare Element kann sich neben einer Entlüftungsöffnung erstrecken. Es kann dabei derart angeordnet sein, dass es sich im Wesentlichen auf einer Seite einer Entlüftungsöffnung erstreckt.

Ferner kann das aufblasbare Element die Entlüftungsöffnung zumindest teilweise umgeben. Hierbei kann es der Form der Entlüftungsöffnung folgen. Das aufblasbare Element kann an einem Kreisbogen der Entlüftungsöffnung anliegen und/oder U-förmig ausgebildet sein. Das aufblasbare Element kann die Entlüftungsöffnung auch ganz umschließen.

Die Gassackanordnung kann eine Entlüftungsöffnung, zwei Entlüftungsöffnungen oder mehr Entlüftungsöffnungen umfassen.

Bei einer Gassackanordnung mit mehreren Entlüftungsöffnungen können diese durch ein gemeinsames Abdeckteil überdeckt werden. Die Entlüftungsöffnungen können jedoch auch durch jeweils ein Abdeckteil überdeckt werden.

Bei der Gassackanordnung kann sich dass das aufblasbare Element zwischen zwei Entlüftungsöffnungen erstrecken.

Das aufblasbare Element der Gassackanordnung kann mit mindestens einer lösbaren Verbindung mit mehreren Abdeckteilen verbunden sein. Ein Aufblasen des aufblasbaren Elements kann die lösbare Verbindung mit der Hülle des Gassacks von mehreren Abdeckteilen lösen. Dabei können mehrere Abdeckteile mit derselben lösbaren Verbindung oder mit jeweils einer lösbaren Verbindung mit der Hülle des Gassacks verbunden sein.

Wie beschrieben, kann die Gassackanordnung mehrere Entlüftungsöffnungen und mehrere Abdeckteile umfassen. Es kann jedoch auch vorgesehen sein, dass die Gassackanordnung genau eine Entlüftungsöffnung und genau ein Abdeckteil umfasst. Des Weiteren kann die Gassackanordnung mehrere Entlüftungsöffnungen und genau ein Abdeckteil umfassen oder genau eine Entlüftungsöffnung und mehrere Abdeckteile.

Falls die Gassackanordnung genau eine Entlüftungsöffnung und genau ein Abdeckteil aufweist, können die Entlüftungsöffnung und das Abdeckteil beide auf der gleichen Seite neben dem aufblasbaren Element angeordnet sein.

Gemäß einer Ausführungsform ist das aufblasbare Element in einem einfach oder mehrfach gefalteten Zustand mit der Hülle des Gassacks verbunden. Die Verbindung kann durch eine lösbare Verbindung erfolgen, welche durch die Faltenlagen geht.

Ein Abdeckteil kann vor Auslösen des Betätigungsmechanismus zumindest in einem Teilbereich gefaltet sein. Es kann dabei einfach gefaltet sein oder mehrfach zu einer Zick-Zack-Form gefaltet sein.

In einer Ausführungsform der Gassackanordnung weist die feste Verbindung des Abdeckteils/der Abdeckteile mit der Hülle des Gassacks zwei Schenkel auf, die von einer gemeinsamen Basis abstehen. Eine solche Form einer Verbindung kann beispielsweise im Wesentlichen eine U-Form sein. Die beiden Schenkel der U-Form können hierbei parallel verlaufen oder auch in einem Winkel von einander abstehen oder zu einander zeigen. Ferner können die Schenkel auch gebogen sein. Die beiden Schenkel können darüber hinaus anstatt durch einen gebogenen Abschnitt auch durch einen geraden Abschnitt verbunden sein. Anstelle einer U-Form ist auch eine V-Form denkbar oder ein Ausschnitt eines Kreises oder Ovals.

Das Abdeckteil kann mittels mindestens einer festen Verbindung von außen mit der Hülle des Gassacks verbunden sein. Diese mindestens eine feste Verbindung kann die Entlüftungsöffnung geschlossen umgeben. Die mindestens eine feste Verbindung kann dabei zumindest teilweise im Randbereich des Abdeckteils verlaufen.

Die Kontur der mindestens einen festen Verbindung, die die Entlüftungsöffnung geschlossen umgibt, kann durch eine lösbare Verbindung durchkreuzt werden.

Es kann vorgesehen sein, dass Gas, welches durch die Entlüftungsöffnung aus dem Gassack abströmt, aus der Gassackanordnung abströmt, beispielsweise in den Innenraum des Fahrzeugs oder an die Umgebungsluft. Es kann jedoch auch vorgesehen sein, dass das Gas aus dem Gassack in eine Kammer abströmt. Eine solche Kammer kann nach Außen geschlossen sein und durch das Abdeckteil mit der Hülle des Gassacks und die geschlossene Kontur der mindestens einen festen Verbindung gebildet werden.

Die Gassackanordnung kann einen Ventilmechanismus umfassen. Dieser kann einer Entlüftungsöffnung oder mehreren Entlüftungsöffnungen zugeordnet sein.

Das Öffnen und Schließen des Ventilmechanismus - gänzlich oder teilweise - kann in Abhängigkeit von der Befüllung der Kammer betätigt werden.

Das Abdeckteil kann ferner zumindest teilweise mehr als eine Lage aufweisen. Die mehreren Lagen können beispielsweise durch zumindest eine Faltung eines Materialzuschnitts oder durch mehrere Materialzuschnitte gebildet werden. Die mehreren Lagen können miteinander verbunden sein.

Eine oder mehrere Entlüftungsöffnungen können in der Hülle des Gassacks vorgesehen sein.

Es kann vorgesehen sein, dass Gas aus dem Gassackinneren durch die Entlüftungsöffnung(en) hindurch in eine Kammer abströmen kann. Eine solche Kammer kann an der Außenseite der Hülle des Gassacks angebracht sein.

Der Betätigungsmechanismus kann beim Aufblasen derart mit dem Abdeckteil zusammenwirken, dass dieses eine Änderung des Austrittsquerschnittes der Entlüftungsöffnung dahingehend bewirkt, dass die Entlüftungsöffnung geöffnet wird. D.h., eine Änderung des Austrittsquerschnitts schließt sowohl ein, dass der Austrittsquerschnitt vergrößert oder verkleinert wird, als auch dass eine geschlossene Entlüftungsöffnung zumindest teilweise geöffnet wird oder eine geöffnete Entlüftungsöffnung geschlossen wird.

Verschiedene Ausführungsformen der Erfindung werden im Folgenden durch Figuren dargestellt. Dabei zeigen:
- Fig. 1: einen Teilschnitt durch ein Airbagmodul (Gassackanordnung) in der Ebene E1 entsprechend Fig.2;
- Fig. 2: eine Innenansicht eines Teilbereiches des Gassacks aus Figur 1 im Bereich einer Vorrichtung zur Steuerung des Austrittsquerschnittes einer Entlüftungsöffnung;
- Fig.3: einen Teilschnitt durch eine Vorrichtung zur Steuerung des Austrittsquerschnittes in der Ebene E2 entsprechend Fig.2;
- Fig.4: einen Teilschnitt durch eine Vorrichtung zur Steuerung des Austrittsquerschnittes in der Ebene E3 entsprechend Fig.2;
- Fig.5: das Airbagmodul aus Figur 1 nach Freigabe einer Entlüftungsöffnung des Gassacks;
- Fig.6: die Innenansicht eines Teilbereiches des Gassacks im Bereich einer Vorrichtung zur Steuerung des Austrittsquerschnittes einer Entlüftungsöffnung;
- Fig.7: einen Teilschnitt durch eine Vorrichtung zur Steuerung des Austrittsquerschnittes in der Ebene E4 entsprechend Fig.6;
- Fig.8: einen Teilschnitt durch eine Vorrichtung zur Steuerung des Austrittsquerschnittes in der Ebene E5 entsprechend Fig.6;
- Fig.9: einen Teilschnitt durch eine Vorrichtung zur Steuerung des Austrittsquerschnittes in der Ebene E5 entsprechend Fig.6 mit einer alternativen Ausführung des aufblasbaren Elementes;
- Fig.10: eine Vorrichtung zur Steuerung des Austrittsquerschnittes aus Fig.6 entsprechend dem Teilschnitt nach Fig.8 nach Freigabe der Entlüftungsöffnungen des Gassacks;
- Fig.11: die Innenansicht eines Teilbereiches des Gassacks im Bereich einer Vorrichtung zur Steuerung des Austrittsquerschnittes einer Entlüftungsöffnung;
- Fig.12: einen Teilschnitt durch eine Vorrichtung zur Steuerung des Austrittsquerschnittes in der Ebene E6 entsprechend Fig.11;
- Fig.13: einen Teilschnitt durch eine Vorrichtung zur Steuerung des Austrittsquerschnittes in der Ebene E7 entsprechend Fig.11;
- Fig.14: eine Vorrichtung zur Steuerung des Austrittsquerschnittes aus Fig.11 entsprechend dem Teilschnitt nach Fig.13 nach Freigabe der Entlüftungsöffnungen des Gassacks;
- Fig.15: eine Vorrichtung zur Steuerung des Austrittsquerschnittes entsprechend Fig.14 in einer perspektivischen Darstellung;
- Fig.16: die Innenansicht eines Teilbereiches des Gassackes im Bereich einer Vorrichtung zur Steuerung des Austrittsquerschnittes einer Entlüftungsöffnung;
- Fig.17: die Vorrichtung zur Steuerung des Austrittsquerschnittes einer Entlüftungsöffnung mit einem Abdeckteil entsprechend Fig.16 in einer perspektivischen Darstellung nach der Freigabe der Entlüftungsöffnung;
- Fig.18: eine Gassackanordnung mit einer Vorrichtung zur Steuerung des Austrittquerschnittes einer Entlüftungsöffnung entsprechend Fig.17 in einer Seitenansicht;
- Fig.19: die Gassackanordnung nach Fig.18 mit einem abgewandelten Abdeckteil;
- Fig. 20: die Gassackanordnung nach Fig.19 aus der Sicht des Insassen;
- Fig. 21: die Gassackanordnung nach Fig.19 mit einer weiteren Abwandlung des Abdeckteils;
- Fig. 22: eine Abwandlung der Gassackanordnung aus den Figuren 19 und 20;
- Fig. 23: die Gassackanordnung gemäß Fig. 22 aus der Sicht des Beifahrers;
- Fig. 24: eine weitere Ausführungsform eines Abdeckteils für eine Gassackanordnung entsprechend Fig. 17;
- Fig. 25: die Anordnung aus Fig. 24 nach Aktivierung der Vorrichtung zur Steuerung des Austrittsquerschnittes einer von dem Abdeckteil überdeckten Entlüftungsöffnung.

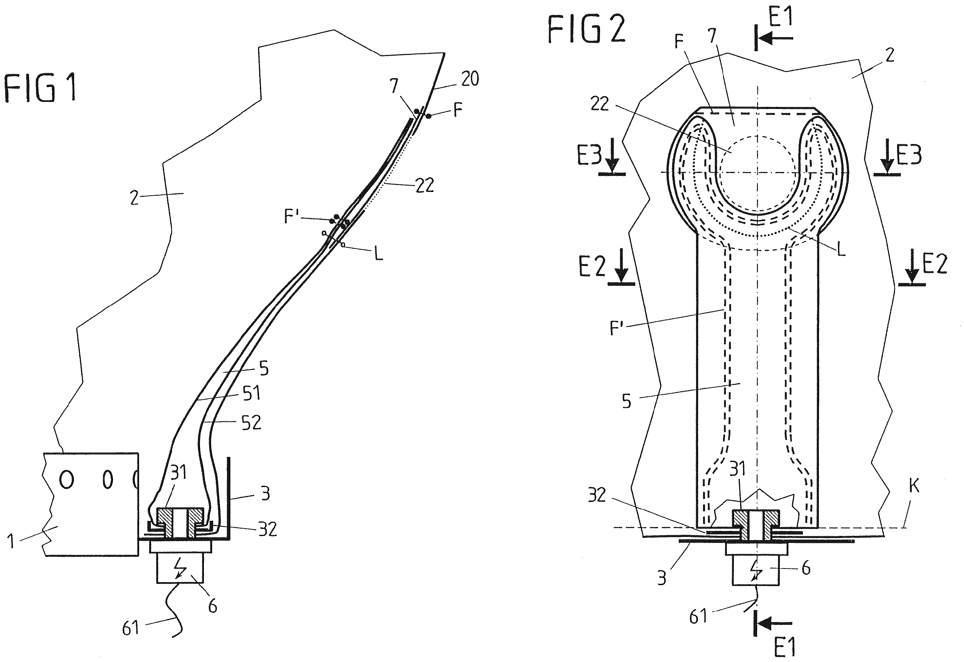

Figur 1 zeigt als wesentliche Komponenten eines Airbagmoduls in schematischer Darstellung einen Gasgenerator 1 zum Aufblasen eines Gassacks 2, welcher vor dem Aufblasen in (zusammengefaltetem bzw. zusammengerafftem) Zustand in einem Modulgehäuse 3 verstaut ist. Das Airbagmodul ist dabei in Figur 1 in einem Zustand dargestellt, in dem der Gassack 2 bereits zumindest teilweise mit Gas aus dem Gasgenerator 1 befüllt und daher aus dem Modulgehäuse 3 ausgetreten ist.

Der Gasgenerator 1, welcher in bekannter Weise ein Gehäuse umfasst, ist mit einem Kaltgas und/oder chemischen Substanzen zur Erzeugung eines Heißgases befüllt und mit Austrittsöffnungen versehen, durch die hindurch Gas aus dem Inneren des Gasgenerators 1 austreten kann, um den Gassack 2 mit Gas zu befüllen, so dass sich dessen Hülle 20 entfaltet und der Gassack 2 zum Schutz eines Fahrzeuginsassen aus dem Modulgehäuse 3 heraus expandiert.

Der Gasgenerator 1 ragt dabei vorliegend in üblicher Weise durch eine sogenannte Einblasöffnung bzw. einen Einblasmund des Gassacks 2 in dessen Inneres hinein, so dass aus den Austrittsöffnungen des Gasgenerators 1 austretende Gase unmittelbar in das Innere des Gassacks 2 gelangen können.

Zur Festlegung des Gassacks 2 am bzw. im Modulgehäuse 3 dienen vorliegend Haltemittel in Form eines Halteringes 32, der den (im Ausführungsbeispiel topfförmigen) Gasgenerator 1 ringförmig umgibt und die Gassackhülle 20 im Bereich des Einblasmundes, nämlich entlang des Randes des Einblasmundes, klemmend befestigt, indem die Gassackhülle 20 entlang des Randes des Einblasmundes des Gassacks 2 zwischen jenem Haltering 32 und einem Boden des Modulgehäuses 3 eingeklemmt wird. Die Elemente zur Fixierung der Haltemittel am Modulgehäuse 3, welche gleichzeitig auch zur Erzeugung der Klemmkraft dienen können, sind dabei nicht mit dargestellt. Hierbei kann es sich beispielsweise um Schraub-, Niet- oder Rastelemente handeln, die außerdem zur Befestigung des Gasgenerators 1 am Modulgehäuse 3 vorgesehen sein können.

Zur Aufnahme des Gasgenerators 1 sowie des Gassacks 2 vor dem Aufblasen weist das Modulgehäuse 3 neben dem bereits erwähnten Boden eine hiervon abstehende (umlaufende) seitliche Begrenzungswand auf.

Der Gassack 2 ist in seiner Hülle 20 in einem Bereich, der beim Aufblasen des Gassacks 2 außerhalb des Modulgehäuses 3 gerät, mit einer Entlüftungsöffnung 22 versehen, durch die hindurch Gas aus dem Inneren des Gassacks 2 in die Umgebung austreten kann. Die Entlüftungsöffnung 22 ist in dem in Figur 1 gezeigten Zustand des Airbagmoduls mit (teilweise) aufgeblasenem Gassack 2 noch durch ein Abdeckteil 7 verschlossen, welches im Ausführungsbeispiel durch einen einteiligen flexiblen Gewebeabschnitt gebildet wird. Das Abdeckteil 7 ist hierzu entlang eines Teilbereiches seines Randes, z.B. entlang des Randes der Entlüftungsöffnung 22 des Gassacks 2, an dessen Hülle 20 über eine feste Verbindung F, z.B. in Form mindestens einer Naht, festgelegt. Entlang eines zweiten Teilbereiches seines Randes ist das Abdeckteil 7 über eine lösbare Verbindung L, z.B. in Form mindestens einer Reißnaht, ebenfalls entlang des Randes der Entlüftungsöffnung 22 des Gassacks 2, an dessen Hülle 20 festgelegt. Gemeinsam umschließen feste F und lösbare L Verbindungen die Entlüftungsöffnung 22 zumindest annähernd vollständig.

Außer dem Abdeckteil 7 wird durch die lösbare Verbindung L auch ein aufblasbares Element 5 an der Hülle 20 des Gassacks 2 festgelegt, wobei vorliegend das Abdeckteil 7 zwischen der Hülle 20 und dem aufblasbaren Element 5 angeordnet ist, d.h. das Abdeckteil 7 wird zumindest teilweise von dem aufblasbaren Element 5 bedeckt.

Das aufblasbare Element 5 ist im Inneren des Gassacks 2 angeordnet und weist eine (z.B. aus Gewebe bestehende) Hülle 51, 52 auf, die mit Gas aus einer (z.B. pyrotechnischen) Gasquelle 6 befüllbar ist. Das aufblasbare Element 5 erstreckt sich (nach Art eines Gaskanals) von der Gasquelle 6 in Richtung der Entlüftungsöffnung 22 ohne diese, weder im Ausgangszustand noch im befüllten Zustand zu überdecken, d.h. das aufblasbare Element 5 verläuft benachbart zur Entlüftungsöffnung 22 (neben dieser). Die nähere Erläuterung erfolgt im Zusammenhang mit Fig. 2. An einem der Entlüftungsöffnung 22 abgewandten Endabschnitt des aufblasbaren Elementes 5 ist diese derart an die Gasquelle 6 angeschlossen, dass von der Gasquelle 6 freigesetztes Gas in das aufblasbare Element 5 gelangt.

Die Gasquelle 6 ist im Ausführungsbeispiel (über nicht dargestellte Befestigungsmittel) mit dem Modulgehäuse 3 verbunden, und dabei hier außerhalb des Modulgehäuses 3, z.B. unterhalb des Gehäusebodens, angeordnet. Sie ist über ein Anschlusskabel 61 mit einer Steuerung verbunden, die, beispielsweise sensorgesteuert, über das Anschlusskabel 61 eine pyrotechnische Ladung der Gasquelle 6 zünden kann, so dass diese Gas zum Befüllen des aufblasbaren Elementes 5 freisetzt.

Zur Befestigung des aufblasbaren Elementes 5 (innerhalb des Modulgehäuses 3) derart, dass dieses über seinen einen Endabschnitt mit Gas aus der Gasquelle 6 befüllbar ist, dient ein Befestigungselement 31, das innerhalb des aufblasbaren Elementes 5 angeordnet ist und derart stufenförmig ausgeführt ist, dass ein erster Bereich des Befestigungselementes 31 innerhalb des aufblasbaren Elementes 5 liegt, während ein zweiter, hiervon abgesetzter Bereich eine Öffnung des aufblasbaren Elementes 5 durchgreift und am Haltering 32 festgelegt ist.

Eine Fixierung des Befestigungselementes 31 am Haltering 32, so dass im Ergebnis auch das aufblasbare Element 5 hieran befestigt ist, kann beispielsweise formschlüssig erfolgen, insbesondere durch Verrasten. Hierzu kann das Befestigungselement 31 als ein (mit seinem zweiten Bereich) in die zugeordnete Öffnung des Halteringes 32 einrastbarer Clip ausgeführt sein.

Das Befestigungselement 31 erstreckt sich mit seinem aus dem aufblasbaren Element 5 hinausragenden und den Haltering 32 sowie zusätzlich den Gassack 2 in der Umgebung seines Einblasmundes durchgreifenden zweiten Bereich bis zu der Gasquelle 6 und ist mit einer Durchtrittsöffnung versehen, durch die hindurch aus der Gasquelle 6 freigesetztes Gas in das Innere des aufblasbaren Elementes 5 gelangen kann.

Zusätzlich zu dem gleichzeitig der Gaseinleitung dienenden Befestigungselement 31 können auch noch weitere Befestigungsmittel zur Fixierung des aufblasbaren Elementes 5 am Haltering 32 und/oder am Modulgehäuse 3 vorgesehen sein, z.B. Niete.

Figur 2 zeigt eine Innenansicht des Gassacks 2 aus Figur 1 im Bereich des aufblasbaren Elementes 5, anhand derer insbesondere die Ausgestaltung des aufblasbaren Elementes 5 sowie dessen Verbindung mit dem Abdeckteil 7 und der Hülle 20 des Gassacks 2 erläutert werden soll.

Das aufblasbare Element 5 bzw. dessen Hülle 51, 52 ist hier durch einen einteiligen Zuschnitt, z.B. aus einem Gewebematerial, gebildet, also insbesondere einem Material, das auch für die Herstellung der Hülle 20 des Gassacks 2 verwendet werden kann. Der Zuschnitt ist entlang einer Symmetrie- bzw. Klapplinie K einmal umgeklappt und die beiden aufeinanderliegenden Lagen 51, 52 des Zuschnittes sind zur Bildung eines an einem Ende geschlossenen, kanalförmigen aufblasbaren Elementes 5 (Gaskanal) entlang ihrer seitlichen Randbereiche fest miteinander verbunden. Die feste Verbindung F' kann beispielsweise durch Nähen, Kleben oder Verschweißen erfolgen. Eine Verbindung zur Hülle 20 des Gassacks 2 besteht an diesen Stellen bevorzugt nicht.

An dem gasquellenseitigen Endabschnitt weist das aufblasbare Element 5 (der Gaskanal) eine Öffnung auf, die von einem stufenförmig abgesetzten Bereich des hierin angeordneten Befestigungselementes 31 durchgriffen wird, wie anhand Figur 1 bereits beschrieben. Im montierten Zustand definiert das aufblasbare Element 5 bzw. der Gaskanal ein geschlossenes Volumen (geschlossene befüllbare Kammer), welches über ein durch das Befestigungselement 31 eingeleitetes, aus der Gasquelle 6 freigesetztes, Gas befüllt werden kann.

An seinem der Entlüftungsöffnung zugewandten Endabschnitt gabelt sich das aufblasbare Element/der Gaskanal 5 U-förmig auf, wobei die beiden Schenkel und der sie verbindende Bereich die Entlüftungsöffnung 22 entlang ihres Randes teilweise umschließen (umschlossener Bereich annähernd 270°). Die lösbare Verbindung L zwischen dem aufblasbaren Element 5 (bzw. dem Abdeckteil 7) und der Hülle 20 des Gassacks 2 verläuft vorliegend entlang des U-förmig ausgeprägten Endabschnittes des aufblasbaren Elements/Gaskanals 5 und zwar durch Teile der Hülle 51, 52 hindurch, die später (bei Zündung der Gasquelle 6) dessen durch die Gasquelle 6 befülltes Volumen begrenzen. Die Verbindung erfolgt dabei derart, dass die Entlüftungsöffnung 22 nicht vom aufblasbaren Element/Gaskanal 5 überdeckt wird.

Die feste Verbindung F zwischen dem Abdeckteil 7 und der Hülle 20 des Gassacks 2 erstreckt sich zwischen den oberen Enden der beiden Schenkel des U-förmigen Endabschnittes des aufblasbaren Elements/Gaskanals 5. Die feste Verbindung F und die lösbare Verbindung L umgeben die Entlüftungsöffnung 22 im Ausführungsbeispiel vollständig.

Die gezeigte Ausführung des U-förmigen Endabschnittes ist lediglich beispielhaft zu verstehen. Zuschnitt und Verbindung mit der Hülle 20 des Gassacks 2 können auch derart ausgeführt sein, dass die Enden der beiden Schenkel beabstandet zur festen Verbindung F zwischen Abdeckteil 7 und Gassack 2 angeordnet sind, wobei auch eine Umschließung der Entlüftungsöffnung 22 von weniger als 180° möglich ist. Auf diese Weise kann das befüllbare Volumen des aufblasbaren Elementes 5 an verschiedene Größen der Entlüftungsöffnung 22 angepasst werden.

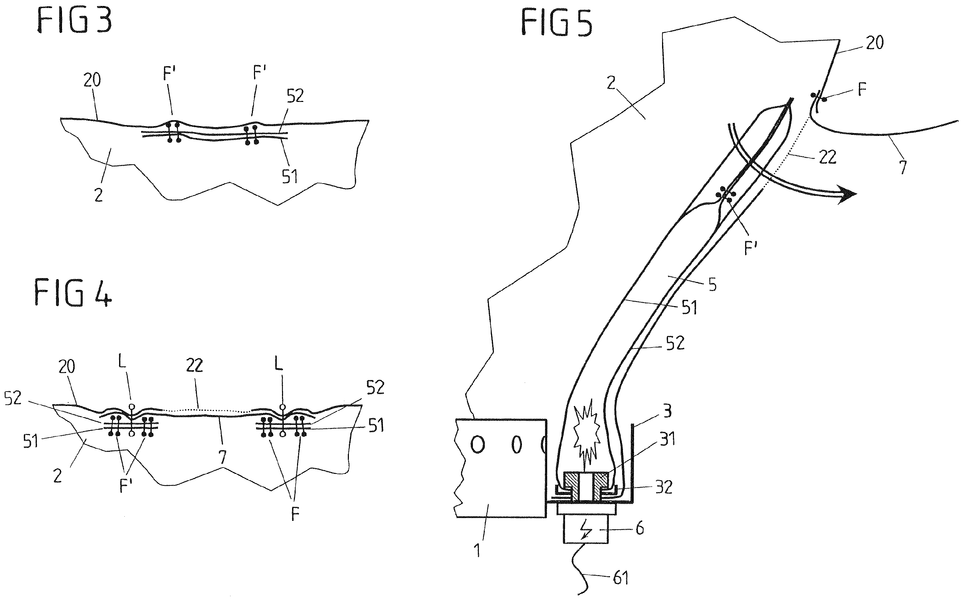

Der in Fig. 3 gezeigte Schnitt verläuft zwischen dem gasquellenseitigen und dem entlüftungsöffnungsseitigen Endabschnitt des aufblasbaren Elementes 5, in der Ebene E2 aus Fig. 2. Hierzu wird zum einen auf die Erläuterungen zur Figur 2 verwiesen. Zu erkennen ist weiterhin der aus zwei Lagen 51, 52 (auch mehr als zwei Lagen sind möglich) bestehende Gaskanal (d.h. das aufblasbare Element 5) sowie die Verbindung der Lagen mittels fester Nähte (feste Verbindungen F'). Für detailliertere Erläuterungen sei auf die Beschreibungen der Fig. 1 und 2 verwiesen.

Der in Fig. 4 gezeigte Schnitt verläuft im Bereich des Abdeckteils 7 des aufblasbaren Elements 5 durch die Entlüftungsöffnung 22 im Bereich der beiden Schenkel des U-förmigen Endabschnittes des Gaskanals (d.h. des aufblasbaren Elements 5) in der Ebene E3 aus Fig. 2. Zu erkennen sind die die geschlossene befüllbare Kammer des aufblasbaren Elementes 5 begrenzenden festen Verbindungen F' zwischen dessen Lagen 51, 52 sowie die Befestigung des aufblasbaren Elementes 5 und des Abdeckteils 7 an der Hülle 20 des Gassacks 2 mittels lösbarer Verbindungen L. Ersichtlich ist weiterhin die Positionierung der lösbaren bzw. festen Verbindungen L, F' und des Abdeckteils 7 bzw. des U-förmigen Endabschnitts bezüglich der Entlüftungsöffnung 22 in der Hülle 20 des Gassacks 2. Auch hierzu wird auf die Erläuterungen zur Fig. 2 verwiesen

Figur 5 zeigt das Airbagmodul aus Fig. 1 nach einem Zünden der dem aufblasbaren Element 5 zugeordneten Gasquelle 6, so dass ersteres mit Gas befüllt wurde. Durch den Druck und gegebenenfalls die Temperatur der in das aufblasbare Element 5 geleiteten Gase werden die lösbaren Verbindungen L zwischen dem aufblasbaren Element 5 und der Hülle 20 des Gassacks 2 zerstört. Dabei wird an diesen Stellen gleichzeitig auch die Verbindung zwischen dem Abdeckteil 7 und der Hülle 20 des Gassacks 2 aufgehoben. Die feste Verbindung F zwischen Gassackhülle 20 und Abdeckteil 7 dagegen bleibt bestehen. Hierdurch kann das Abdeckteil 7 aufgrund des im Gassack 2 herrschenden Innendruckes durch die Entlüftungsöffnung hindurchgedrückt werden (mit der festen Verbindung F als Anlenkbereich für eine Schwenkbewegung), so dass diese nicht mehr verschlossen ist. Damit treten die Gase aus dem Inneren des Gassacks 2 durch die Entlüftungsöffnung 22 hindurch aus und der Innendruck im Gassack 2 wird - wie bei Auslösung der Gasquelle 6 gewünscht - reduziert.

Die Gasquelle 6 und das aufblasbare Element 5 bilden somit einen Betätigungsmechanismus zur Betätigung des Abdeckteils 7.

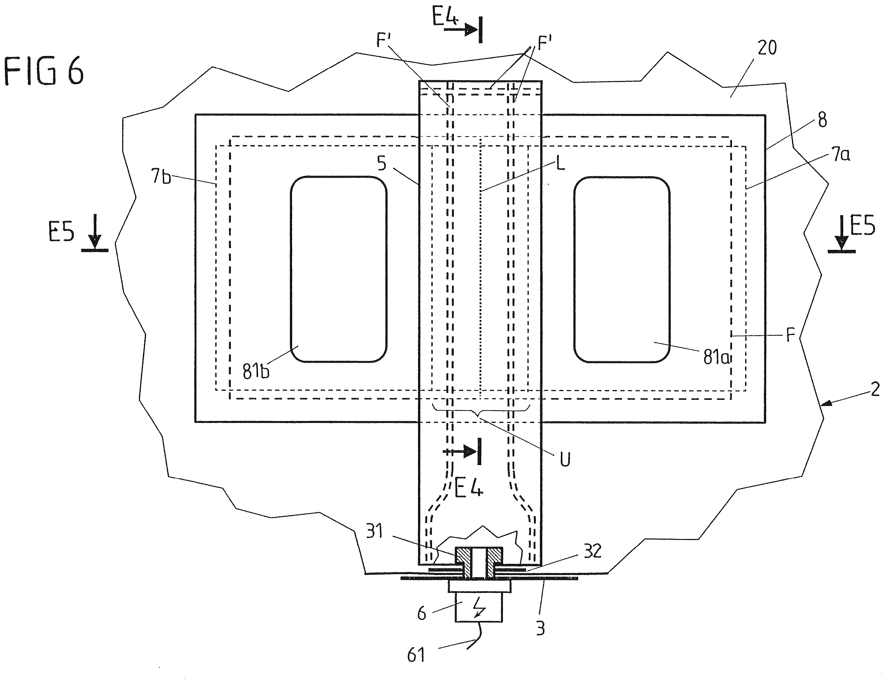

Im Zusammenhang mit den folgenden Figuren 6 bis 10 wird eine zweite Ausführungsform der Gassackanordnung beschrieben. Grundsätzliche Erläuterungen in der Beschreibung der Figuren 1 bis 5 sind auch auf diese zweite Ausführungsform übertragbar. Dazu gehören Erläuterungen zum Aufbau einer Gassackanordnung, zur Anbindung der einzelnen Komponenten, zur Funktionsweise einer Gassackanordnung und sowie zu Aufbau und Ansteuerung der Betätigungsvorrichtung (des Betätigungsmechanismus).

Mit der Ausführungsform der Figuren 6 bis 10 wird eine Vorrichtung zur Steuerung des Austrittsquerschnittes einer/mehrerer Entlüftungsöffnung(en) geschaffen, die weitestgehend ohne Modifizierungen des aufblasbaren Elementes 5 auskommt, wenn sich in Abhängigkeit von den Einsatzbedingungen der Gassackanordnung (des Airbagmoduls) die Größen des Austrittsquerschnittes der Entlüftungsöffnung(en) ändern sollten. Das aufblasbare Element 5 liegt in einer standardisierten Ausführung (konstantes Volumen, identische Nahtverläufe und Nahtausführungen) für die unterschiedlichsten Austrittsquerschnitte vor. Ein weiterer Vorteil dieser Ausführung liegt darin, dass damit vergleichsweise große Austrittsquerschnitte gesteuert werden können, da ein aufblasbares Element 5 (eine Betätigungsvorrichtung) die Abdeckteile mehrerer Entlüftungsöffnungen betätigt.

Diese zweite Ausführungsform weist zwei Entlüftungsöffnungen 22a, 22b auf, die jeweils durch ein Abdeckteil 7a, 7b verschlossen werden. Die Entlüftungsöffnungen 22a, 22b sind vorliegend im Wesentlichen rechteckig ausgeführt, wobei die Form in diesem Zusammenhang jedoch von untergeordneter Bedeutung ist. Beispielsweise können die Entlüftungsöffnungen 22a, 22b auch in Gestalt zweier halbkreisförmiger Öffnungen vorliegen. Im montierten Zustand der Vorrichtung zur Steuerung des Austrittsquerschnittes der Entlüftungsöffnungen 22a, 22b überlappen sich die Abdeckteile 7a, 7b in einem mittleren Bereich (Überlappungsbereich U) und werden gemeinsam von einer Abdeckung 8 abgedeckt. Letztere weist zwei Öffnungen 81 a, 81 b auf, die jeweils deckungsgleich zu einer der Entlüftungsöffnungen 22a, 22b angeordnet sind. Der längserstreckte Überlappungsbereich U verläuft in der Darstellung der Fig.6 in vertikaler Richtung.

Die Abdeckteile 7a, 7b und die Abdeckung 8 sind gemeinsam mittels einer festen Verbindung F (bevorzugt in Form einer durchgehenden oder aus mehreren Abschnitten bestehenden Naht) an der Hülle 20 des Gassacks 2 festgelegt. Die Naht verläuft dabei entlang des kompletten Randes der Abdeckung 8, wobei die Ränder der zwischen Abdeckung 8 und Gassackhülle 20 angeordneten Abdeckteile 7a, 7b jedoch nur teilweise erfasst werden. Vorliegend werden die Abdeckteile 7a, 7b nur an den Bereichen ihres Randes an der Gassackhülle 20 fixiert, welche von dem Überlappungsbereich U am weitesten entfernt sind. In der Darstellung der Fig. 6 erfolgt dies durch die vertikal verlaufenden Abschnitte der festen Naht F.

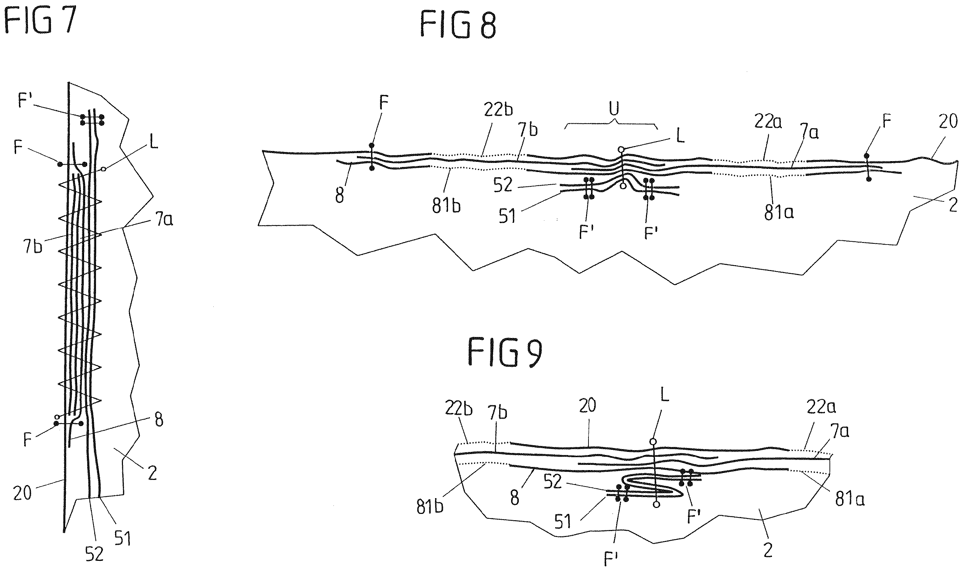

Zwischen den Entlüftungsöffnungen 22a, 22b ist das aufblasbare Element 5 angeordnet, welches dabei die Abdeckung 8 in vertikaler Richtung (s. Fig. 6) komplett überdeckt. Auch bei dieser Ausführungsform erstreckt sich das aufblasbare Element 5 (nach Art eines Gaskanals) von der Gasquelle 6 in Richtung der Entlüftungsöffnungen 22a, 22b ohne diese (weder im Ausgangszustand noch im befüllten Zustand) zu überdecken; d.h. das aufblasbare Element 5 verläuft benachbart zu den Entlüftungsöffnungen 22a, 22b (neben diesen). Über eine lösbare Verbindung L (bevorzugt in Form einer Reißnaht) ist das aufblasbare Element 5 an der Hülle 20 des Gassacks 2 festgelegt. Mittels dieser Reißnaht werden auch die Abdeckteile 7a, 7b und die Abdeckung 8 an der Hülle 20 des Gassacks 2 fixiert, wobei im montierten Zustand die Abdeckteile 7a, 7b und die Abdeckung 8 zwischen der Hülle 20 des Gassacks 2 und dem aufblasbaren Element 5 angeordnet sind (siehe Fig. 7, 8). Die lösbare Verbindung L verläuft in Richtung des längserstreckten Überlappungsbereiches U der Abdeckteile 7a, 7b (in Fig. 6 in vertikaler Richtung) in etwa mittig in diesem. Die Länge der lösbaren Verbindung L entspricht dabei in etwa der Länge des Überlappungsbereiches U.

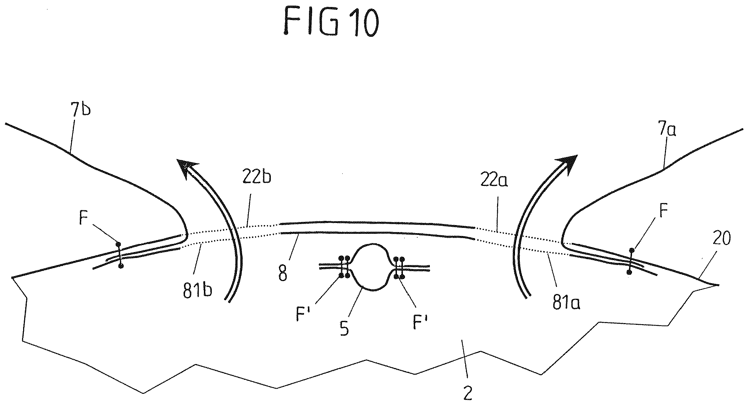

Figur 9 zeigt das aufblasbare Element 5 der zweiten Ausführungsform. Dieses liegt hier gefaltet vor und zwar derart, dass sich quer zu seiner Erstreckungsrichtung ein zickzackförmiger Querschnitt ergibt. Die lösbare Verbindung L (Reißnaht), mittels der das aufblasbare Element 5 an der Hülle 20 des Gassacks 2 festgelegt ist, fixiert bei dieser Abwandlung auch dessen Faltenverlauf. Durch das Falten des aufblasbaren Elementes 5 wird das Volumen, welches zum Lösen der lösbaren Verbindungen L durch die Gasquelle 6 befüllt werden muss, reduziert. Der für das Lösen notwendige Innendruck kann sich schneller aufbauen, was letztendlich zu einer schnelleren Freigabe der Austrittsquerschnitte und somit zu einem schnelleren Reagieren auf bestimmte Crashparameter führt. Eine nähere Erläuterung der Funktionsweise der zweiten Ausführung erfolgt nachfolgend im Zusammenhang mit der Fig.10.

Der zickzackförmige Querschnitt ist lediglich beispielhaft zu verstehen. Jede andere Faltung, die zu einer Reduzierung des befüllbaren Volumens führt, ist ebenso denkbar. Das schließt auch solche Faltungen ein, bei denen sich der Querschnitt des aufblasbaren Elementes 5 in seiner Erstreckungsrichtung ändert. Auch sind gefaltete aufblasbare Elemente 5 bei den nachfolgend beschriebenen Ausführungen anwendbar.

Figur 10 zeigt die Vorrichtung zur Steuerung des Austrittsquerschnittes aus Fig. 6 nach einem Zünden der dem aufblasbaren Element 5 zugeordneten Gasquelle 6, so dass ersteres mit Gas befüllt wurde. Durch den Druck und gegebenenfalls die Temperatur der in das aufblasbare Element 5 geleiteten Gase wird die lösbare Verbindung L zwischen dem aufblasbaren Element 5 und der Hülle 20 des Gassacks 2 zerstört. Dabei wird an diesen Stellen gleichzeitig auch die Verbindung zwischen der Abdeckung 8, den Abdeckteilen 7a, 7b und der Hülle 20 des Gassacks 2 aufgehoben. Die feste Verbindung F zwischen Gassackhülle 20 und den Abdeckteile 7a, 7b dagegen bleibt bestehen. Hierdurch können die Abdeckteile 7a, 7b aufgrund des im Gassack 2 herrschenden Innendruckes durch die zugeordneten Entlüftungsöffnungen 22a, 22b hindurchgedrückt werden (mit der jeweiligen festen Verbindung F als Anlenkbereich für eine Schwenkbewegung), so dass diese nicht mehr verschlossen sind. Damit treten die Gase aus dem Inneren des Gassacks 2 durch die Entlüftungsöffnungen 22a, 22b hindurch aus und der Innendruck im Gassack 2 wird - wie bei Auslösung der Gasquelle 6 gewünscht - reduziert.

Die Gasquelle 6 und das aufblasbare Element 5 bilden somit einen Betätigungsmechanismus zur Betätigung der beiden Abdeckteile 7a, 7b.

Es wird darauf hingewiesen, dass die beschriebene Ausführung bei entsprechender Auslegung auch bei nur einem Abdeckteil 7 anwendbar ist. Die Entlüftungsöffnungen 22a, 22b (bzw. die Entlüftungsöffnung 22) befinden sich dann lediglich auf einer Seite des aufblasbaren Elementes 5 und sind nicht symmetrisch zu diesem angeordnet. Auch ist es möglich, auf eine Abdeckung 8 zu verzichten und lediglich die Abdeckteile 7a, 7b zwischen dem aufblasbaren Element 5 und der Gassackhülle 20 anzuordnen.

Die beiden vorbeschriebenen Ausführungen einer Vorrichtung zur Steuerung des Austrittsquerschnittes von Entlüftungsöffnungen 22, 22a, 22b wurden im Zusammenhang mit einer Anordnung im Gassackinneren erläutert. Die Vorrichtung kann jedoch auch an der Außenseite der Gassackhülle 20 angeordnet werden.

Im Folgenden wird eine dritte Ausführungsform beschrieben werden. Diese Ausführungsform stellt eine Abwandlung der zweiten Ausführungsform dar, wobei auch hier auf die im Zusammenhang mit den vorherigen Figuren erläuterten grundsätzlichen Sachverhalte (Aufbau einer Gassackanordnung, Anbindung der einzelnen Komponenten, Funktionsweise einer Gassackanordnung und Aufbau und Ansteuerung der Betätigungsvorrichtung) Bezug genommen wird.

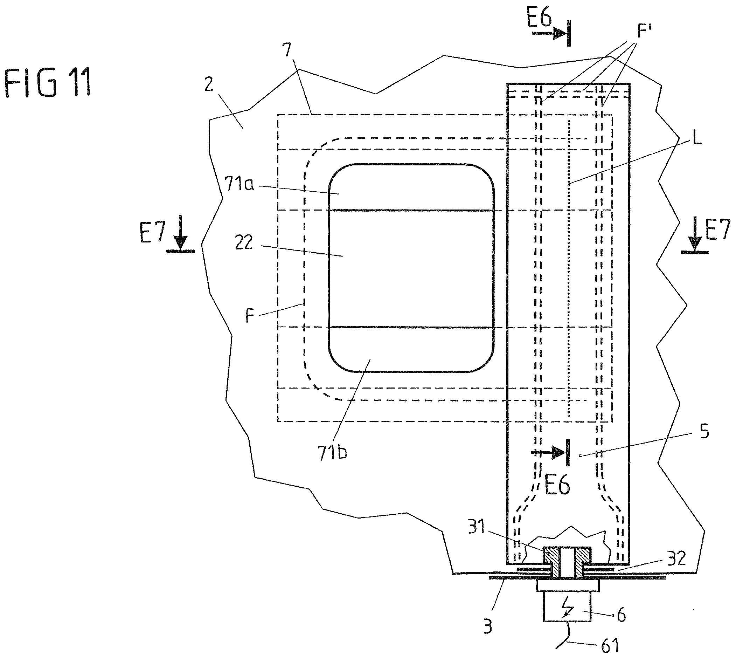

Bei der dritten Ausführungsform umfasst die Gassackanordnung lediglich eine Entlüftungsöffnung 22 und ein Abdeckteil 7, die beide einseitig neben dem aufblasbaren Element 5 angeordnet sind, wie in Fig. 11 zu sehen, wobei auch hier die Form der Entlüftungsöffnung 22 von untergeordneter Bedeutung ist. Ein weiterer Unterschied besteht darin, dass das aufblasbare Element 5 im Gassackinneren angeordnet ist, während das Abdeckteil 7 außerhalb des Gassacks 2 an dessen Hülle 20 befestigt ist.

Vor der Aktivierung des Betätigungsmechanismus wird die Entlüftungsöffnung 22 durch ein Abdeckteil 7 verschlossen, welches an der Außenseite der Hülle 20 des Gassacks 2 festgelegt ist. Das Abdeckteil 7 ist hierzu entlang eines Teilbereiches seines Randes, z.B. entlang des Randes der Entlüftungsöffnung 22 des Gassacks 2, an dessen Hülle 20 über eine feste Verbindung F, z.B. in Form einer Naht, festgelegt. Die feste Verbindung F umgibt die Entlüftungsöffnung 22 im Wesentlichen in U-Form. Geschlossen wird die U-Form durch eine die äußeren Enden der Schenkel der U-Form verbindende (diese kreuzende) lösbare Verbindung L (z.B. Reißnaht) zwischen Abdeckteil 7 und Hülle 20 des Gassacks 2. Die geschlossene Verbindung verhindert weitestgehend den ungewollten Austritt der im Gassack 2 befindlichen Gase, wenn der Betätigungsmechanismus nicht aktiviert wurde.

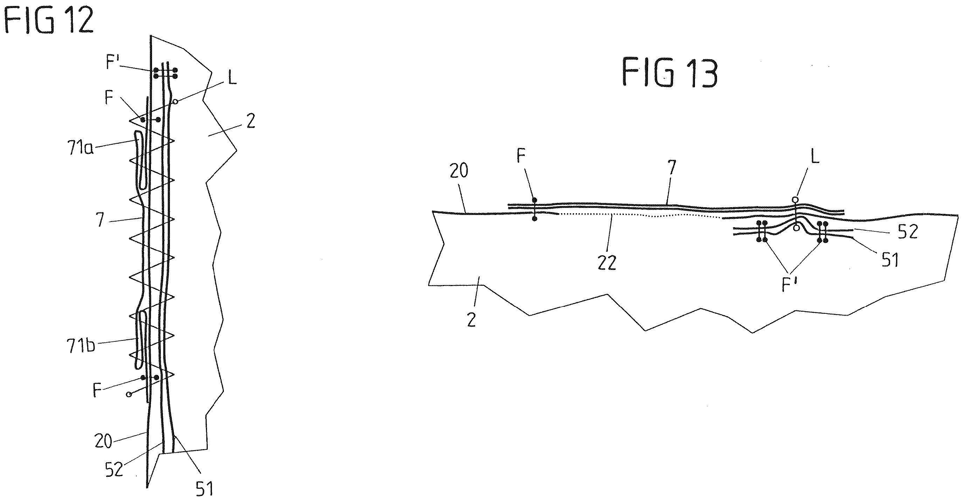

Gebildet wird das Abdeckteil 7 durch einen einteiligen flexiblen Gewebezuschnitt, welcher an zwei gegenüberliegenden Bereichen 71 a, 71 b des Randes zick-zack-förmig gefaltet und erst anschließend an der Hülle 20 des Gassacks 2 festgelegt wird (s. Fig. 12, 13). Das Festlegen erfolgt derart, dass sich die gefalteten Bereiche 71 a, 71 b entlang der Schenkel der U-Form erstrecken (insbesondere parallel zu diesen verlaufen), wie in Fig. 11 zu sehen. Dabei erfolgt die Fixierung der Faltenlage der gefalteten Bereiche 71 a, 71 b an deren ersten Enden durch den Abschnitt der U-förmigen festen Verbindung F, der die Schenkel der U-Form miteinander verbindet. An zweiten Enden erfolgt die Fixierung der Faltenlage der gefalteten Bereiche 71 a, 71 b des Abdeckteils 7 durch die die Schenkel der U-Form verbindende lösbare Verbindung L. Die Schenkel der U-Form selbst dienen nicht der Fixierung der Faltenlage.

Wie beschrieben, erfolgt die Faltung des Abdeckteils 7 vor dessen Fixierung bevorzugt an zwei gegenüberliegenden Bereichen 71 a, 71 b des Randes. Es ist aber auch möglich, dass nur eine einseitige Faltung, an nur einem Randbereich erfolgt. Ebenso können die gefalteten Bereiche 71 a, 71 b auch geneigt zu den Schenkeln der U-Form verlaufen und nicht parallel.

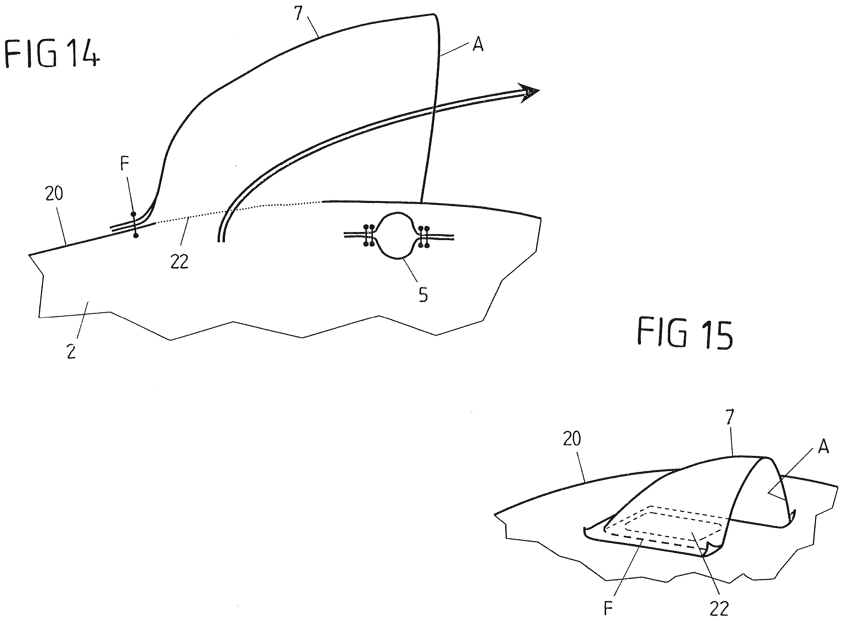

Die Figuren 14 und 15 zeigen die Vorrichtung zur Steuerung des Austrittsquerschnittes aus Fig. 11 nach einem Zünden der dem aufblasbaren Element 5 zugeordneten Gasquelle 6, so dass ersteres mit Gas befüllt wurde. Durch den Druck und gegebenenfalls die Temperatur der in das aufblasbare Element 5 geleiteten Gase wird die lösbare Verbindung L zwischen dem aufblasbaren Element 5 und der Hülle 20 des Gassacks 2 zerstört. Damit einhergehend wird auch die lösbare Verbindung L zwischen dem Abdeckteil 7 und der Hülle 20 des Gassacks 2 aufgehoben, wobei gleichzeitig auch die Fixierung der Faltenlagen der gefalteten Bereiche 71 a, 71 b des Abdeckteils 7 an deren zweiten Enden gelöst wird. Die feste Verbindung F (vorliegend in U-Form) zwischen der Gassackhülle 20 und dem Abdeckteil 7 dagegen bleibt bestehen.

Nun kann das Abdeckteil 7 aufgrund des im Gassack 2 herrschenden Innendruckes teilweise von der Hülle 20 des Gassacks 2 abgehoben werden, sodass die Entlüftungsöffnung 22 nicht mehr verschlossen ist. Damit treten die Gase aus dem Inneren des Gassacks 2 durch die Entlüftungsöffnung 22 hindurch aus, und der Innendruck im Gassack 2 wird - wie bei Auslösung der Gasquelle 6 gewünscht - reduziert.

Durch die U-Form der festen Verbindung F zwischen Abdeckteil 7 und Gassackhülle 20, sowie die einseitig gelöste Fixierung der Faltenlage ihrer gefalteten Bereiche 71 a, 71 b, nimmt das nunmehr nach außen gewölbte (weg von der Hülle 20 des Gassacks 2) Abdeckteil 7 die Form einer Hutze, mit einem definierten Querschnitt für die aus dem Gassack 2 austretenden Gase, an. Die Größe des Austrittsquerschnittes A wird dabei bestimmt durch Dimensionierung der Falten der gefalteten Bereiche 71 a, 71 b des Abdeckteils 7. Die sich ergebende Form einer Hutze bietet die Möglichkeit, die aus dem Gassackinneren austretenden Gase in eine bestimmte Richtung zu lenken, um beispielsweise einen Kontakt mit dem/den Fahrzeuginsassen möglichst zu verhindern.

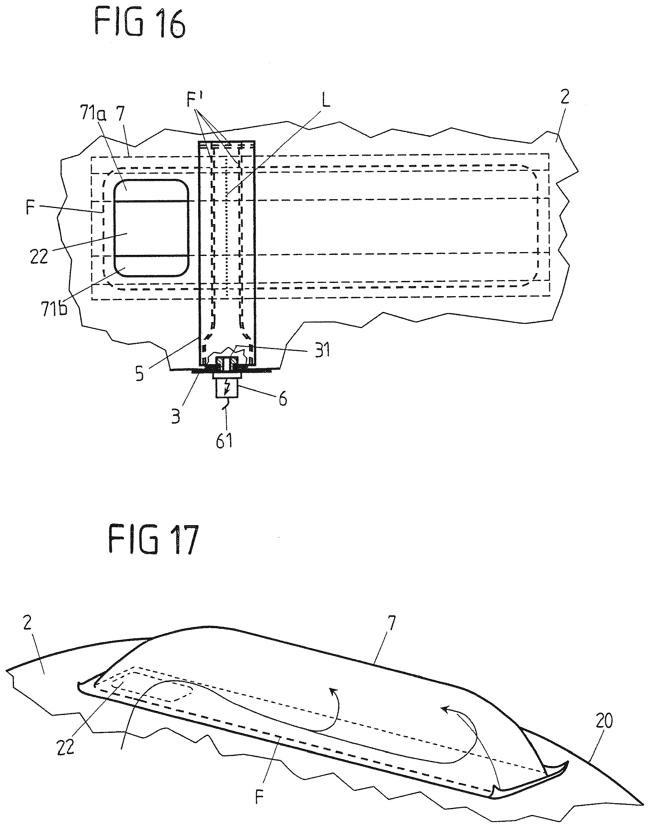

Im Folgenden wird eine vierte Ausführungsform beschrieben werden. Diese Ausführungsform ist eine Modifikation der dritten Ausführungsform, wobei hier das sich längserstreckende und die Entlüftungsöffnung 22 überdeckende Abdeckteil 7 wesentlich größere Abmessungen aufweist und mittels einer festen Verbindung F (z.B. in Form einer Naht) an der Außenseite der Hülle 20 des Gassacks 2 festgelegt ist, welche die Entlüftungsöffnung 22 umgibt und eine geschlossene Kontur bildet. Dies kann sowohl durch eine durchgehende Verbindung als auch durch mehrere sich überlappende Verbindungsabschnitte erfolgen. Vorliegend verläuft die feste Verbindung F entlang des kompletten Randbereiches des Abdeckteils 7 (siehe Fig. 16).

Gekreuzt wird die geschlossene Kontur der festen Verbindung F durch eine lösbare Verbindung L zwischen Abdeckteil 7 und Hülle 20 das Gassacks 2, welche benachbart zur Entlüftungsöffnung 22 verläuft und diese so verschlossen hält. Die lösbare Verbindung L dient auch hier gleichzeitig der Befestigung des aufblasbaren Elements 5 des Betätigungsmechanismus im Inneren des Gassacks 2.

Hinsichtlich der Ausgestaltung der vierten Ausführungsform wird auch auf die Schnitte in Fig. 12 und Fig. 13 (teilweise) und die darauf bezogene Beschreibung verwiesen.

Figur 17 zeigt die Vorrichtung zur Steuerung des Austrittsquerschnittes aus Fig. 16 nach dem Zünden der dem aufblasbaren Element 5 zugeordneten Gasquelle. Die damit einhergehenden Abläufe entsprechen den im Zusammenhang mit den Figuren 14 und 15 beschriebenen.

Wie bei der dritten Ausführungsform bleibt die feste Verbindung F zwischen der Hülle 20 des Gassacks 2 und dem Abdeckteil 7 bestehen. Durch die geschlossene Kontur der festen Verbindung F bildet das Abdeckteil 7 zusammen mit der Hülle 20 des Gassacks 2 jedoch eine von dessen Inneren separate (abgeschlossene) Kammer, in die aus dem Inneren des Gassackes 2 durch die Entlüftungsöffnung 22 hindurch austretende Gase einströmen. Von dort aus gelangen die Gase nicht in die Umgebung, sondern verbleiben in der Kammer. Jedoch kann die Kammer unter bestimmten Umständen auch mit einer zusätzlichen Abströmöffnung versehen sein. Diese kann dann so dimensioniert sein, dass die Gase nur verzögert in die Umgebung freigegeben werden, in der Kammer sich also ein Innendruck trotzdem aufbauen kann.

Durch das Vorsehen der Kammer wird ein Gassack 2 mit einem zusätzlichem Volumen bereitgestellt, das durch die von dem Gasgenerator 1 freigesetzte Gase befüllt werden muss. In Abhängigkeit vom Zeitpunkt der Aktivierung des Betätigungsmechanismus zur Freigabe der Entlüftungsöffnung 22 (und damit der Bereitstellung der Kammer) wird der Anstieg des Druckes im Inneren des Gassacks 2 reduziert bzw. der Druckabfall nach Überschreiten eines Maximums beschleunigt. Da die Gase die Kammer nicht verlassen können, wird der sich nach deren Befüllung einstellende Druck im weiteren Verlauf nur verzögert abgebaut. Das bedeutet, dass auch das Rückhaltevermögen des befüllten Gassacks 2 über einen längeren Zeitraum aufrechterhalten werden kann. Über die Dimensionierung der Kammer (deren Volumen) und die Größe der Entlüftungsöffnung 22 wird der angestrebte Druckverlauf voreingestellt und damit die Gassackanordnung an bestehende Randbedingungen (Gasliefermenge des Gasgenerators 1, Größe des Gassacks 2 etc.) angepasst.

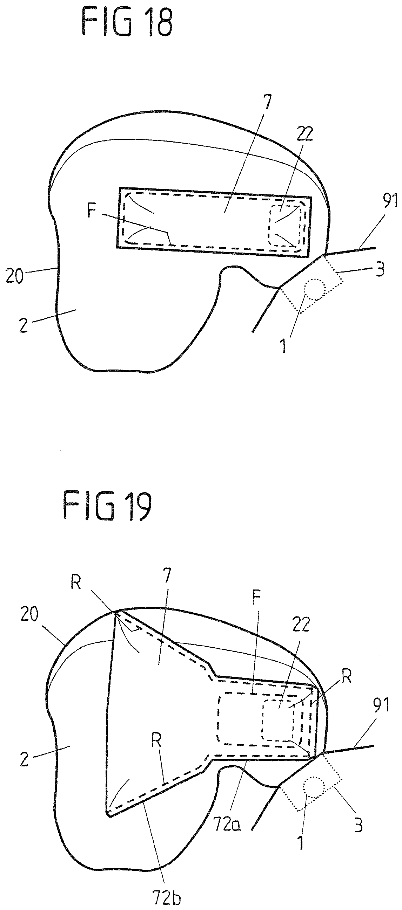

In Fig. 18 wird die vierte Ausführungsform einer Vorrichtung zur Steuerung des Austrittquerschnittes einer Entlüftungsöffnung 22 an einer Gassackanordnung für die Beifahrerseite eines Kraftfahrzeugs in einer Seitenansicht gezeigt. Zu sehen ist der Zustand des Gassacks 2 nach dem Befüllen durch die von einem Gasgenerator 1 freigesetzten Gase. Im Ausgangszustand ist die Gassackanordnung unterhalb der Instrumententafel 91 des Kraftfahrzeugs untergebracht.

Fig. 19 zeigt eine alternative Ausführung für ein Abdeckteil 7 der vierten Ausführungsform. Im Gegensatz zu der im Zusammenhang mit den Figuren 16 bis 18 beschriebenen Ausführung ist das Abdeckteil 7 hier mehrlagig (zweilagig) ausgeführt. Gebildet wird es durch einen einteiligen Zuschnitt, bevorzugt aus einem Material zur Herstellung der Hülle 20 des Gassacks 2, welcher entlang einer Symmetrielinie umgeklappt und entlang der Randbereiche der aufeinanderliegenden Lagen fest miteinander verbunden (vernäht) wird (Verbindung R).

Das Abdeckteil 7 weist einen sich längserstreckenden ersten schmalen Abschnitt 72a auf, der daran anschließend in einen sich beidseitig erweiternden zweiten Abschnitt 72b übergeht. Lediglich in seinem ersten Abschnitt 72a ist das Abdeckteil 7 an der Hülle 20 des Gassacks 2 über die feste Verbindung F festgelegt. Das hat zur Folge, dass der zweite Abschnitt 72b des Abdeckteils 7 im befüllten Zustand des Gassacks 2 gegenüber dem ersten Abschnitt 72a schwenkbar ist.

Es wird darauf hingewiesen, dass die beschriebenen Form des Abdeckteils 7 lediglich beispielhaft zu verstehen ist. Angedeutet werden soll, dass über die Form auch eine Anpassung der Gassackanordnung (des entfalteten Gassacks 2) an die räumliche Umgebung im Fahrzeuginnenraum erfolgen kann. Das Abdeckteil 7 kann beispielsweise über seine komplette Länge (erster und zweiter Abschnitt 72a, 72b) einen identischen Querschnitt aufweisen oder sich auch nur einseitig erweitern. Auch können für die Herstellung des Abdeckteils 7 von deckungsgleichen Formen abweichende Gewebelagen verwendet werden.

Ebenso können sich Gassack 2 und Abdeckteil 7 (Kammer) im befüllten, noch nicht durch den Fahrzeuginsassen beaufschlagten Zustand an Teilen des Fahrzeuginnenraumes (Instrumententafel, Seitenstruktur des Kraftfahrzeugs) abstützen (in Kontakt miteinander stehen).

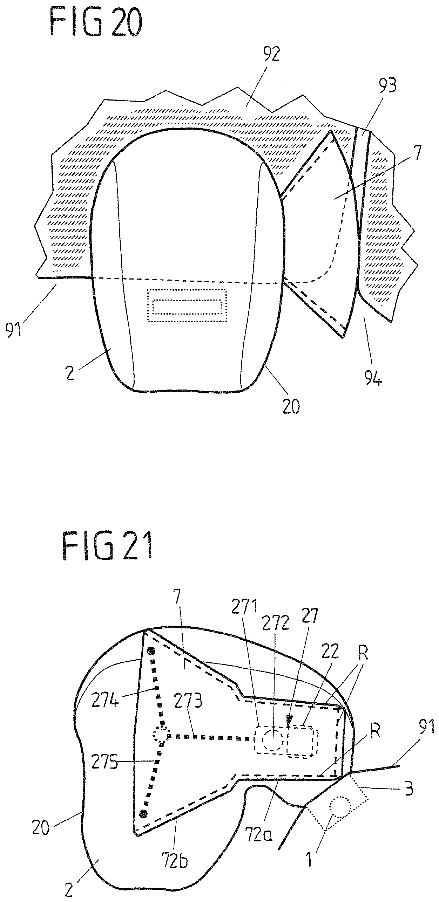

In Fig. 20 ist die Gassackanordnung der Fig. 19 aus der Sicht des Beifahrers dargestellt. Das Abdeckteil 7 (die Kammer) ist rechts angeordnet und deckt Teile der neben der Windschutzscheibe 92 verlaufenden A-Säule 93 bzw. der Seitenstruktur 94 des Kraftfahrzeugs ab. Das schützt den Insassen vor Verletzungen, wenn dieser beispielsweise bei einem schrägen Aufprall vom Gassack 2 abgleitet und sich beispielsweise mit seinem Kopf in Richtung A-Säule 93 bewegt.

In Fig. 21 ist die Gassackanordnung der Fig. 19 mit einer weiteren Abwandlung des Abdeckteils 7 zu sehen. Die feste Verbindung F zwischen der Hülle (20) des Gassacks 2 und dem Abdeckteil 7 wurde dabei aus Übersichtlichkeitsgründen nicht dargestellt.

Vorliegend ist der Entlüftungsöffnung 22 ein Ventilmechanismus 27 zugeordnet. Dieser umfasst ein relativ zur Entlüftungsöffnung 22 bewegliches Ventilelement 271 mit einer Ventilöffnung 272 und mehreren zugeordneten Zugbändern 273, 274, 275, wobei mindestens ein Zugband mit dem Ventilelement 271 in Verbindung steht. Vorliegend verläuft ein erstes Zugband 273 ausgehend vom Ventilelement 271 in Richtung des zweiten Abschnittes 72b des Abdeckteils 7. Mit dem Ende des ersten Zugbandes 273 sind ein zweites und drittes Zugband 274, 275 verbunden, die jeweils mit ihrem anderen Ende an äußeren Bereichen des zweiten Abschnittes 72b festgelegt sind.

Im Ausgangszustand bis unmittelbar nach der Aktivierung des Betätigungsmechanismus (Abdeckteil/Kammer 7 haben sich noch nicht voll entfaltet) befindet sich der Ventilmechanismus in einer Stellung, in der die Entlüftungsöffnung 22 nicht verschlossen wird. Die Ventilöffnung 272 liegt deckungsgleich zur Entlüftungsöffnung 22, sodass ein Übertritt der Gase vom Gassack 2 in die Kammer erfolgt. Im weiteren Verlauf der Befüllung des Abdeckteils 7 (der Kammer) entfaltet sich dieses und leitet über die Zugbänder 273, 274, 275 (durch deren Straffung) eine Kraft in das Ventilelement 271 ein. Letzteres wird dadurch aus seiner Position bewegt, wobei Ventil- und Entlüftungsöffnung 272, 22 außer Deckung zueinander geraten. Ein Zurückströmen der in der Kammer befindlichen Gase in den Gassack 2 wird unterbunden bzw. weitestgehend verhindert.

Durch die beschriebene Maßnahme kann der Innendruck in der Kammer länger aufrechterhalten werden als der im Inneren des Gassacks 2, was das Verletzungsrisiko für den Insassen durch einen Kontakt mit der A-Säule 93 im Falle eines Abgleitens vom Gassack 2 weiter minimiert.

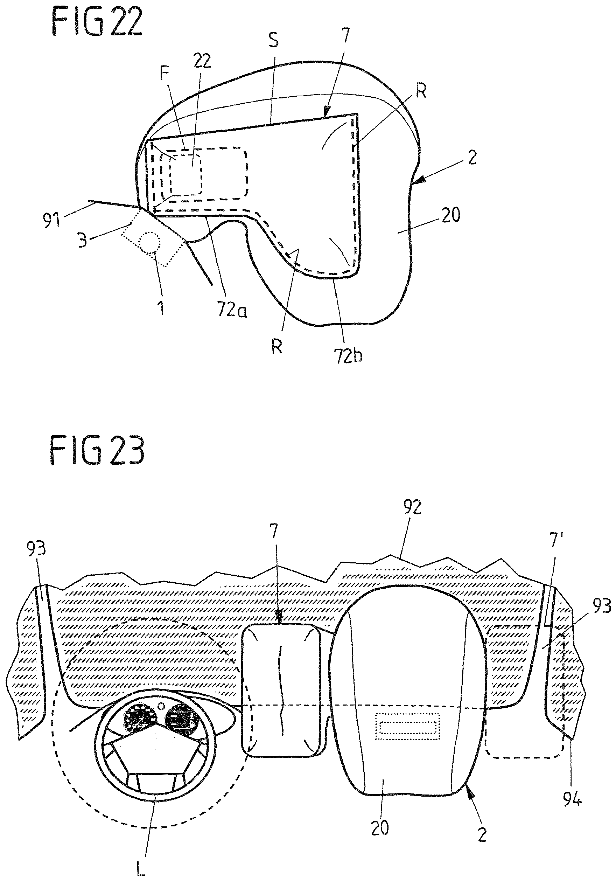

Abweichend von der im Zusammenhang mit den Fig. 19 und 20 beschriebenen Ausführungsform ist bei einem in den Fig. 22 und 23 dargestellten (fünften) Ausführungsbeispiel das Abdeckteil auf der dem Fahrer zugewandten Seite angeordnet.

Fig. 22 zeigt eine Gassackanordnung mit einer Vorrichtung zur Steuerung des Austrittquerschnittes einer Entlüftungsöffnung 22 entsprechend Fig. 17 in einer Seitenansicht. Wie in der Ausführung der Fig. 19 und 20 ist das Abdeckteil 7 mehrlagig (zweilagig) ausgeführt und wird durch einen einteiligen Zuschnitt gebildet, der ebenso an einer Symmetrielinie umgeklappt und entlang der Randbereiche der aufeinander liegenden Lagen fest miteinander verbunden wird. Im Gegensatz zur Ausführung der Fig. 19 und 20 verläuft hier die Symmetrielinie annähernd horizontal und der sich an den ersten Abschnitt 72a anschließende zweite Abschnitt 72b erweitert sich lediglich einseitig. Im Zusammenhang mit den Fig. 19 und 20 getroffene Aussagen hinsichtlich Schwenkbarkeit, Form und Herstellung gelten auch für die Ausführungsform der Figur 22.

In Fig.23 ist die Gassackanordnung der Fig.22 aus der Sicht des Beifahrers dargestellt. Das Abdeckteil 7 (in Form einer Kammer) ist vorliegend in Fahrtrichtung gesehen links am Gassack 2 angeordnet und deckt zwischen Beifahrer und Fahrer befindliche Bereiche der Instrumententafel ab. In Abhängigkeit von der Aufprallrichtung bei einem schrägen Aufprall können hierdurch sowohl Beifahrer als auch Fahrer vor Verletzungen geschützt werden, wenn diese von dem ihnen zugeordneten Gassack abgleiten. Angedeutet wird in der Zeichnung auch, dass jeweils ein Abdeckteil 7 bzw. 7' (je eine Kammer) rechts und links am Gassack 2 angeordnet sein kann.

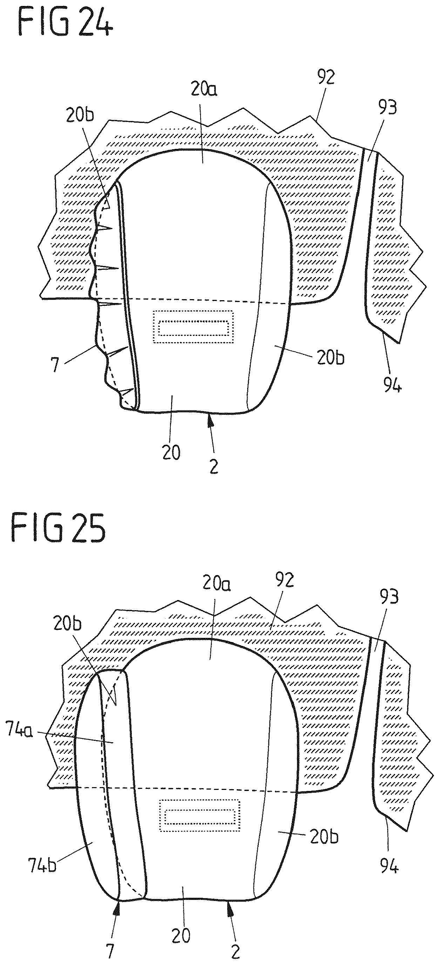

In den Fig. 24 und 25 ist eine weitere Ausführungsform eines Abdeckteils 7 (in Form einer Kammer) für eine Gassackanordnung mit einer Vorrichtung zur Steuerung des Austrittquerschnittes einer Entlüftungsöffnung entsprechend Fig. 17 gezeigt. Der Gassack 2 besteht aus mehreren Gewebezuschnitten (vorliegend drei Gewebezuschnitte, nämlich ein Mittelteil 20a und zwei Seitenteile 20b), die entlang benachbarter Randbereiche miteinander verbunden sind. Ein Gewebezuschnitt (hier ein linkes Seitenteil 20b) wird überdeckt von dem Abdeckteil 7, wobei die Randbereiche des Gewebezuschnittes und des Abdeckteils 7 gemeinsam mit dem benachbarten (linken) Randbereich des Mittelteils 20a verbunden sind.

Fig. 24 zeigt die Gassackanordnung bei nicht aktivierter Vorrichtung zur Steuerung des Austrittquerschnittes einer Entlüftungsöffnung; d.h. die durch das Abdeckteil 7 und die Gassackhülle 20 gebildete Kammer ist nicht befüllt.

Wird die Vorrichtung zur Steuerung des Austrittsquerschnittes aktiviert, so wird die Entlüftungsöffnung freigegeben und die Kammer befüllt. Dieser Zustand ist in Fig.25 zu sehen. Das Abdeckteil 7 ist mehrteilig ausgeführt. Es besteht vorliegend aus zwei Gewebezuschnitten, einem Wandungsteil 74b, welches annähernd deckungsgleich mit dem benachbarten Seitenteil 20b ausgeführt ist und einem Abstandsteil 74a, das den Abstand zwischen Wandungsteil 74b und Seitenteil 20b überbrückt. Über die Breite des Abstandteils 74 a wird das Volumen der Kammer festgelegt.

## Patentansprüche

1. Gassackanordnung für ein Fahrzeuginsassen-Rückhaltesystem, mit
- einem zum Schutz eines Fahrzeuginsassen durch einen Gasgenerator (1) aufblasbaren Gassack (2), dessen Hülle (20) einen mit Gas befüllbaren Innenraum des Gassacks (2) definiert,
- einer Entlüftungsöffnung (22, 22a, 22b), durch die hindurch Gas aus dem Gassack (2) abströmen kann, und
- einer Vorrichtung zur Steuerung des Austrittsquerschnittes der Entlüftungsöffnung (22, 22a, 22b), die mindestens ein Abdeckteil (7, 7a, 7b) umfasst, mit dem die Entlüftungsöffnung (22, 22a, 22b) überdeckbar ist, um diese zumindest teilweise zu verschließen, und die weiterhin einen Betätigungsmechanismus umfasst, der mit dem Abdeckteil (7, 7a, 7b) zusammenwirkt, um den Austrittsquerschnitt der Entlüftungsöffnung (22, 22a, 22b) zu verändern,
wobei der Betätigungsmechanismus eine zusätzliche Gasquelle (6) und ein von dem Gassack (2) verschiedenes und mittels der Gasquelle (6) aufblasbares Element (5) aufweist, welches beim Aufblasen derart mit dem Abdeckteil (7, 7a, 7b) zusammenwirkt, dass eine Änderung des Austrittsquerschnittes der Entlüftungsöffnung (22, 22a, 22b) bewirkt wird,
**dadurch gekennzeichnet,**
**dass** das Abdeckteil (7, 7a, 7b) mittels mindestens einer festen Verbindung (F) und mindestens einer lösbaren Verbindung (L) mit der Hülle (20) des Gassacks (2) verbunden ist und dass das aufblasbare Element (5) als ein von dem Abdeckteil (7, 7a, 7b) verschiedenes Element ausgebildet ist, welches über eine lösbare Verbindung (L) ebenfalls mit der Hülle (20) des Gassacks (2) verbunden ist, wobei das aufblasbare Element (5) über die lösbare Verbindung (L) mit der Hülle (20) des Gassacks (2) verbunden ist, über die auch das Abdeckteil (7, 7a, 7b) mit der Hülle (20) des Gassacks (2) verbunden ist.

2. Gassackanordnung nach Anspruch 1, **dadurch gekennzeichnet, dass** die lösbare Verbindung (L), das Abdeckteil (7, 7a, 7b) und das aufblasbare Element (5) derart ausgebildet sind, dass bei Aufblasen des aufblasbaren Elements (5) die lösbare Verbindung (L) gelöst wird und das Abdeckteil (7, 7a, 7b) unter Beibehaltung seiner festen Verbindung (F) mit der Hülle (20) des Gassacks (2) von der Entlüftungsöffnung abhebbar oder durch die Entlüftungsöffnung (22, 22a, 22b) hindurchdrückbar ist.

3. Gassackanordnung nach Anspruch 1 oder 2, **dadurch gekennzeichnet, dass** das Abdeckteil (7, 7a, 7b) zwischen dem aufblasbaren Element (5) und der Hülle (20) des Gassacks (2) angeordnet ist.

4. Gassackanordnung nach einem der vorangehenden Ansprüche, **dadurch gekennzeichnet, dass** das aufblasbare Element (5) benachbart zu der Entlüftungsöffnung (22, 22a, 22b) angeordnet ist.

5. Gassackanordnung nach einem der vorangehenden Ansprüche, **dadurch gekennzeichnet, dass** die Gassackanordnung mehrere Entlüftungsöffnungen (22a, 22b) aufweist.

6. Gassackanordnung nach Anspruch 5, **dadurch gekennzeichnet, dass** die Entlüftungsöffnungen (22a, 22b) durch jeweils ein Abdeckteil (7a, 7b) überdeckt werden.

7. Gassackanordnung nach einem der vorangehenden Ansprüche, **dadurch gekennzeichnet, dass** das aufblasbare Element (5) mit mehreren Abdeckteilen (7a, 7b) zusammenwirkt.

8. Gassackanordnung nach einem der vorangehenden Ansprüche, **dadurch gekennzeichnet, dass** das Abdeckteil (7, 7a, 7b) durch mindestens eine feste Verbindung (F) derart an der Außenseite des Gassacks festgelegt ist, dass die mindestens eine feste Verbindung (F) die Entlüftungsöffnung (22, 22a, 22b) in einer geschlossenen Kontur umgibt.

9. Gassackanordnung nach Anspruch 8, **dadurch gekennzeichnet, dass** die mindestens eine feste Verbindung (F) zumindest teilweise entlang des Randbereiches des Abdeckteils (7, 7a, 7b) verläuft.

10. Gassackanordnung nach Anspruch 8 oder 9, **dadurch gekennzeichnet, dass** die geschlossene Kontur der mindestens einen festen Verbindung (F) durch eine lösbare Verbindung (L) gekreuzt wird.

11. Gassackanordnung nach einem der Ansprüche 8 bis 10, **dadurch gekennzeichnet, dass** das Abdeckteil (7, 7a, 7b) mit der Hülle (20) des Gassacks (2) durch die geschlossene Kontur der mindestens einen festen Verbindung (F) eine nach außen geschlossene Kammer bildet.

12. Gassackanordnung nach einem der vorangehenden Ansprüche, **dadurch gekennzeichnet, dass** der Entlüftungsöffnung (22, 22a, 22b) ein Ventilmechanismus (27) zugeordnet ist.

13. Gassackanordnung nach den Ansprüchen 11 und 12, **dadurch gekennzeichnet, dass** der Ventilmechanismus (27) in Abhängigkeit von der Befüllung der Kammer betätigt werden kann.

14. Gassackanordnung nach einem der vorangehenden Ansprüche, **dadurch gekennzeichnet, dass** durch die Entlüftungsöffnung (22, 22a, 22b) hindurch Gas in eine an der Außenseite der Hülle (20) des Gassacks (2) angeordnete Kammer abströmen kann.

15. Gassackanordnung nach einem der vorangehenden Ansprüche, **dadurch gekennzeichnet, dass** der Betätigungsmechanismus beim Aufblasen derart mit dem Abdeckteil (7, 7a, 7b) zusammenwirkt, dass es eine Änderung des Austrittsquerschnittes der Entlüftungsöffnung (22, 22a, 22b) dahingehend bewirkt, dass die Entlüftungsöffnung (22, 22a, 22b) geöffnet wird.

## Claims

1. A gas bag arrangement for a vehicle occupant restraint system, comprising
- a gas bag (2) inflatable by a gas generator (1) to protect a vehicle occupant, whose envelope (20) defines an interior space of the gas bag (2) that can be filled with gas,
- a vent opening (22, 22a, 22b) through which gas can flow out of the gas bag (2), and
- a device for controlling the outlet cross-section of the vent opening (22, 22a, 22b), which comprises at least one covering part (7, 7a, 7b) with which the vent opening (22, 22a, 22b) can be covered, in order to at least partly close the same, and which furthermore comprises an actuating mechanism which interacts with the covering part (7, 7a, 7b), in order to vary the outlet cross-section of the vent opening (22, 22a, 22b),
wherein the actuating mechanism includes an additional gas source (6) and an element (5) different from the gas bag (2) and inflatable by means of the gas source (6), which during inflation interacts with the covering part (7, 7a, 7b) such that it effects a change in the outlet cross-section of the vent opening (22, 22a, 22b),
**characterized in**
**that** the covering part (7, 7a, 7b) is connected with the envelope (20) of the gas bag (2) by means of at least one fixed connection (F) and at least one releasable connection (L) and that the inflatable element (5) is formed as an element different from the covering part (7, 7a, 7b) which via a releasable connection (L) likewise is connected with the envelope (20) of the gas bag (2), wherein via the releasable connection (L) the inflatable element (5) is connected with the envelope (20) of the gas bag (2), via which the covering part (7, 7a, 7b) also is connected with the envelope (20) of the gas bag (2).

2. The gas bag arrangement according to claim 1, **characterized in that** the releasable connection (L), the covering part (7, 7a, 7b) and the inflatable element (5) are formed such that during inflation of the inflatable element (5) the releasable connection (L) is released and the covering part (7, 7a, 7b) can be lifted from the vent opening or be pushed through the vent opening (22, 22a, 22b) by maintaining its fixed connection (F) with the envelope (20) of the gas bag (2).

3. The gas bag arrangement according to claim 1 or 2, **characterized in that** the covering part (7, 7a, 7b) is arranged between the inflatable element (5) and the envelope (20) of the gas bag (2).

4. The gas bag arrangement according to any of the preceding claims, **characterized in that** the inflatable element (5) is arranged adjacent to the vent opening (22, 22a, 22b).

5. The gas bag arrangement according to any of the preceding claims, **characterized in that** the gas bag arrangement includes several vent openings (22a, 22b).

6. The gas bag arrangement according to claim 5, **characterized in that** the vent openings (22a, 22b) each are covered by a covering part (7a, 7b).

7. The gas bag arrangement according to any of the preceding claims, **characterized in that** the inflatable element (5) interacts with several covering parts (7a, 7b).

8. The gas bag arrangement according to any of the preceding claims, **characterized in that** the covering part (7, 7a, 7b) is fixed on the outside of the gas bag by at least one fixed connection (F) such that the at least one fixed connection (F) surrounds the vent opening (22, 22a, 22b) in a closed contour.

9. The gas bag arrangement according to claim 8, **characterized in that** the at least one fixed connection (F) at least partly extends along the edge region of the covering part (7, 7a, 7b).

10. The gas bag arrangement according to claim 8 or 9, **characterized in that** the closed contour of the at least one fixed connection (F) is crossed by a releasable connection (L).

11. The gas bag arrangement according to any of claims 8 to 10, **characterized in that** with the envelope (20) of the gas bag (2) the covering part (7, 7a, 7b) forms a chamber closed to the outside due to the closed contour of the at least one fixed connection (F).

12. The gas bag arrangement according to any of the preceding claims, **characterized in that** a valve mechanism (27) is associated to the vent opening (22, 22a, 22b).

13. The gas bag arrangement according to claims 11 and 12, **characterized in that** the valve mechanism (27) can be actuated in dependence on the filling of the chamber.

14. The gas bag arrangement according to any of the preceding claims, **characterized in that** through the vent opening (22, 22a, 22b) gas can flow out into a chamber arranged on the outside of the envelope (20) of the gas bag (2).

15. The gas bag arrangement according to any of the preceding claims, **characterized in that** during inflation the actuating mechanism interacts with the covering part (7, 7a, 7b) such that it effects a change in the outlet cross-section of the vent opening (22, 22a, 22b) to the effect that the vent opening (22, 22a, 22b) is opened.

## Revendications

1. Agencement de coussin de sécurité gonflable pour un système de retenue d'un occupant de véhicule, comprenant
- un coussin de sécurité gonflable (2) pouvant être gonflé par un générateur de gaz (1) pour protéger un occupant d'un véhicule, dont l'enveloppe (20) définit un espace interne du coussin de sécurité gonflable (2) pouvant être rempli de gaz,
- une ouverture de désaérage (22, 22a, 22b) à travers laquelle du gaz peut sortir du coussin de sécurité gonflable (2), et
- un dispositif pour commander la section transversale de sortie de l'ouverture de désaérage (22, 22a, 22b), qui comprend au moins une partie de recouvrement (7, 7a, 7b), avec laquelle l'ouverture de désaérage (22, 22a, 22b) peut être recouverte afin de fermer celle-ci au moins en partie, et qui comprend en outre un mécanisme d'actionnement qui coopère avec la partie de recouvrement (7, 7a, 7b) afin de modifier la section transversale de sortie de l'ouverture de désaérage (22, 22a, 22b),
le mécanisme d'actionnement présentant une source de gaz supplémentaire (6) et un élément (5) différent du coussin de sécurité gonflable (2) et pouvant être gonflé au moyen de la source de gaz (6), qui, lors du gonflage, coopère avec la partie de recouvrement (7, 7a, 7b) de telle sorte qu'il se produise une variation de la section transversale de sortie de l'ouverture de désaérage (22, 22a, 22b),
**caractérisé en ce que**
la partie de recouvrement (7, 7a, 7b) est connectée à l'enveloppe (20) du coussin de sécurité gonflable (2) au moyen d'au moins une connexion fixe (F) et d'au moins une connexion amovible (L), et **en ce que** l'élément gonflable (5) est réalisé sous forme d'un élément différent de la partie de recouvrement (7, 7a, 7b), qui est également connecté à l'enveloppe (20) du coussin de sécurité gonflable (2) par le biais d'une connexion amovible (L), l'élément gonflable (5) étant connecté à l'enveloppe (20) du coussin de sécurité gonflable (2) par le biais de la connexion amovible (L), par le biais de laquelle la partie de recouvrement (7, 7a, 7b) est également connectée à l'enveloppe (20) du coussin de sécurité gonflable (2).

2. Agencement de coussin de sécurité gonflable selon la revendication 1, **caractérisé en ce que** la connexion amovible (L), la partie de recouvrement (7, 7a, 7b) et l'élément gonflable (5) sont réalisés de telle sorte que lors du gonflage de l'élément gonflable (5), la connexion amovible (L) soit desserrée et que la partie de recouvrement (7, 7a, 7b), tout en conservant sa connexion fixe (F) à l'enveloppe (20) du coussin de sécurité gonflable (2), puisse être soulevée de l'ouverture de désaérage ou puisse être poussée à travers l'ouverture de désaérage (22, 22a, 22b).

3. Agencement de coussin de sécurité gonflable selon la revendication 1 ou 2, **caractérisé en ce que** la partie de recouvrement (7, 7a, 7b) est disposée entre l'élément gonflable (5) et l'enveloppe (20) du coussin de sécurité gonflable (2).

4. Agencement de coussin de sécurité gonflable selon l'une quelconque des revendications précédentes, **caractérisé en ce que** l'élément gonflable (5) est disposé à côté de l'ouverture de désaérage (22, 22a, 22b).

5. Agencement de coussin de sécurité gonflable selon l'une quelconque des revendications précédentes, **caractérisé en ce que** l'agencement de coussin de sécurité gonflable présente plusieurs ouvertures de désaérage (22a, 22b).

6. Agencement de coussin de sécurité gonflable selon la revendication 5, **caractérisé en ce que** les ouvertures de désaérage (22a, 22b) sont recouvertes à chaque fois par une partie de recouvrement (7a, 7b).

7. Agencement de coussin de sécurité gonflable selon l'une quelconque des revendications précédentes, **caractérisé en ce que** l'élément gonflable (5) coopère avec plusieurs parties de recouvrement (7a, 7b).

8. Agencement de coussin de sécurité gonflable selon l'une quelconque des revendications précédentes, **caractérisé en ce que** la partie de recouvrement (7, 7a, 7b) est fixée au côté extérieur du coussin de sécurité gonflable par au moins une connexion fixe (F) de telle sorte que l'au moins une connexion fixe (F) entoure l'ouverture de désaérage (22, 22a, 22b) suivant un contour fermé.

9. Agencement de coussin de sécurité gonflable selon la revendication 8, **caractérisé en ce que** l'au moins une connexion fixe (F) s'étend au moins en partie le long de la région de bord de la partie de recouvrement (7, 7a, 7b).

10. Agencement de coussin de sécurité gonflable selon la revendication 8 ou 9, **caractérisé en ce que** le contour fermé de l'au moins une connexion fixe (F) est intersecté par une connexion amovible (L).

11. Agencement de coussin de sécurité gonflable selon l'une quelconque des revendications 8 à 10, **caractérisé en ce que** la partie de recouvrement (7, 7a, 7b) forme avec l'enveloppe (20) du coussin de sécurité gonflable (2), par le contour fermé de l'au moins une connexion fixe (F), une chambre fermée vers l'extérieur.

12. Agencement de coussin de sécurité gonflable selon l'une quelconque des revendications précédentes, **caractérisé en ce qu'**un mécanisme de soupape (27) est associé à l'ouverture de désaérage (22, 22a, 22b).

13. Agencement de coussin de sécurité gonflable selon les revendications 11 et 12, **caractérisé en ce que** le mécanisme de soupape (27) peut être actionné en fonction du remplissage de la chambre.

14. Agencement de coussin de sécurité gonflable selon l'une quelconque des revendications précédentes, **caractérisé en ce que** du gaz peut s'écouler à travers l'ouverture de désaérage (22, 22a, 22b) dans une chambre disposée au niveau du côté extérieur de l'enveloppe (20) du coussin de sécurité gonflable (2).

15. Agencement de coussin de sécurité gonflable selon l'une quelconque des revendications précédentes, **caractérisé en ce que** le mécanisme d'actionnement, lors du gonflage, coopère avec la partie de recouvrement (7, 7a, 7b) de telle sorte qu'il provoque une variation de la section transversale de sortie de l'ouverture de désaérage (22, 22a, 22b) de manière à ce que l'ouverture de désaérage (22, 22a, 22b) soit ouverte.
